(19) **Europäisches Patentamt**

**European Patent Office**

**Office européen des brevets**

(11) **EP 1 020 509 B1**

(12) **EUROPÄISCHE PATENTSCHRIFT**

(45) Veröffentlichungstag und Bekanntmachung des Hinweises auf die Patenterteilung:
**16.07.2003   Patentblatt 2003/29**

(51) Int Cl.$^7$: **C09K 11/02**, H01J 29/18

(21) Anmeldenummer: **00200051.1**

(22) Anmeldetag: **07.01.2000**

(54) **Farbbildschirm mit Farbpigment**

Colour display panel with colour pigment

Ecran couleur avec pigment coloré

(84) Benannte Vertragsstaaten:
**DE FR GB**

(30) Priorität: **16.01.1999   DE 19901539**

(43) Veröffentlichungstag der Anmeldung:
**19.07.2000   Patentblatt 2000/29**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Feldmann, Claus, Philips Corporate Intellectual**
**52064 Aachen (DE)**
• **Opitz, Joachim, Philips Corporate Intellectual**
**52064 Aachen (DE)**

(74) Vertreter: **Volmer, Georg, Dipl.-Ing.**
**Philips Intellectual Property & Standards GmbH,**
**Postfach 50 04 42**
**52088 Aachen (DE)**

(56) Entgegenhaltungen:
**EP-A- 0 697 373**          **US-A- 5 126 166**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Farbbildschirm, insbesondere für eine Farbbildröhre, einen Farbmonitor oder ein Plasma-Display, mit einem roten Leuchtstoff und einem Farbpigment.

Farbbildschirme und Farbmonitore werden häufig in hellem Umgebungslicht benutzt. Um das Schirmbild bei diese Beleuchtung besser sichtbar zu machen und um die Augen weniger zu ermüden, soll ihr Bildschirm blendfrei, reflexionsarm und kontrastreich sein.

Man kann den Kontrast maximieren, indem man den Außenlichteinfluß im Vergleich zur Eigenlichtdichte der Leuchtstoffe in der Bildschirmbeschichtung erhöht. Dies kann man zum Beispiel durch Farbfilter in Form anorganischer Pigment erreichen, die so ausgewählt werden, daß sie für die vom jeweiligen Leuchtstoff emittierte Farbe möglichst transparent sind und die restlichen Spektralanteile absorbieren, so daß die diffuse Reflexion des Außenlichtes an dem Leuchtstoffpulver unterdrückt wird.

Ein Farbpigment, das zur Pigmentierung eines Leuchtstoffes geeignet ist, muß Absorptionseigenschaften haben, die der Emissionscharakteristik des Leuchtstoffes entsprechen. Weiterhin wird von einer Pigmentierung für Leuchtstoffbeschichtungen gefordert, daß sie im Vakuum stabil ist, durch Elektronenbeschuß oder Gasentladungen nicht degradiert wird, inert gegen reduzierende, oxidierende oder hydrolisierende Reagenzien ist und sich bei erhöhter Temperatur nicht zersetzt.

Aus EP-A-0 697 373 sind bereits Farbpigmente zur Verwendung in der Herstellung von einbrennfähigen Glasfarben und beim Einfärben von bei unterhalb von 700°C einbrennfähigen Glasuren sowie zum Einfärben von Kunststoffen, Lacken und kosmetischen Artikeln auf der Basis von Oxidnitrid-Pigmenten bekannt, deren Atomverhältnis Stickstoff zu Sauerstoff für die Farbe bestimmend ist und die in der Pyrochlorstrukrur kristallisieren mit der allgemeinen Formel $A_xA'_{2-x}B_2O_{5+x}N_{2-x}$ oder $A'_2B_{2-y}B'_yO_{5+y}N_{2-y}$. worin A, A', B und B' für ein oder mehrere Kationen aus der Reihe A: Mg, Ca,Sr, Ba, Zn; A:Ln(=Seltenerdmetall) Bi, Al, Fe; B: V, Nb, Ta, Mo, W; B': Ti, Zr, Hf, Sn, Ge, Si, Nb, Ta und x und y eine Zahl zwischen 0 und kleiner zwei stehen, ausgenommen $Ln_2Ta_2O_5N_2$ oder die in Spinellstruktur kristallisieren und die allgemeine Formel $CD_{2-m}D'_mO_{4-m}N_m$ oder $C_{1-n}C'_nD_2O_{4-n}N_n$ haben, worin C, C, D und D' für ein oder mehrere Kationen aus der Reihe C: Mg, Ca, Mn, Fe, Co, Ni, Zn; D: Al, Ga, In, i, V, Cr, Ge, Co, Ni; D': Ti, Zr, Hf, Sn, Ge, Si, Nb, Ta; C': Al, Ga, In, Ti, V. Cr, Fe, Co, Ni und m eine Zahl zwischen größer 0 und 2 und n eine Zahl zwischen größer 0 und 1 steht oder die in Elpasolitstruktur kristallisieren und die allgemeine Formel $A'_2QBO_{5-z}N_{1+z}$, worin z für 0, 1 oder 2 steht und bei z gleich 0 Q ein zweiwertiges Metallion C, bei z gleich Q ein dreiwertiges MetallionA" und bei z gleich 2 Q ein vierwertiges Metallion D ist entsprechend den Formeln $A'_2CBO_5N$, $A'_2A"BO_4N_2$, $A'_2DBO_3N_3$, worin A', B, S und D die vorerwähnte Bedeutung haben und A" für Ln oder Bi steht. Weiterhin sind aus EP-A-0697 373 Farbpigmente mit erhöhter Farbbrillanz auf der Basis von in der Perowskitstruktur vorliegenden Oxidnitriden bekannt, deren Atomverhältnis Stickstoff zu Sauerstoff für die Farbe bestimmend ist, der allgemeinen Formel $A_{1-u}A'_uBO_{2-u}N_{1+u}$ oder $A'B_{1-w}B'_wO_{1+w}N_{2-w}$, worin A, A', B und B' für ein oder mehrere Kationen aus der Reihe A: Mg, Ca, Sr, Ba, A': Ln, Bi, SI, Fe; B: V, Nb, Ta; B: Ti, Zr, Hf, Sn, Ge und u und w für eine Zahl zwischen 0 und 1 stehen, jedoch für A' = Ln u ≠ 1 und w ≠ u ist.

Es ist die Aufgabe der vorliegenden Erfindung, einen Farbbildschirm mit einem rotem Leuchtstoff und einem Farbpigment zur Verfügung zu stellen, der ein kontrastreiches Bild liefert, geringe Reflektanz für externes Licht besitzt, hohe Emissionsleuchtdichte und eine gute Emissionsfarbqualität aufweist und kostengünstig herzustellen ist.

Erfindungsgemäß wird die Aufgabe gelöst durch Farbbildschirm mit einem roten Leuchtstoff und einem Farbpigment,

wobei das Farbpigment ein Oxidnitrid-Pigment der allgemeinen Formel

$$A_{1-x}A'_xBO_{2-x}N_{1+x} \text{ mit A = Mg, Ca, Sr, Ba, Zn, A' = Ln, Bi, Al, Fe, B= V, Nb, Ta, Mo, W}$$

$$\text{und B' = Ti, Zr, Hf, Sn, Ge, Si, Nb, Ta und } 0 < x < 1$$

oder ein Oxidnitrid-Pigment der allgemeinen Formel

$$AB_{1-x}B'_xBO_{1+x}N_{2-x} \text{ mit A = Mg, Ca, Sr, Ba, Zn, A' = Ln, Bi, Al, Fe, B= V, Nb, Ta, Mo, W}$$

$$\text{und B' = Ti, Zr, Hf, Sn, Ge, Si, Nb, Ta und } 0 < x < 1$$

oder ein Oxidnitrid-Pigment der allgemeinen Formel

$A_yA'_{2-y}B_2O_{5+y}N_{2-y}$ mit A = Mg, Ca, Sr. Ba, Zn, A' = Ln, Bi, Al, Fe, B= V, Nb, Ta, Mo, W

und B' = Ti, Zr, Hf, Sn, Ge, Si, Nb, Ta und 0 < y < 2

oder ein Oxidnitrid-Pigment der allgemeinen Formel

$A'_2B_{2-y}B'_yO_{5+y}N_{2-y}$ mit A = Mg, Ca, Sr. Ba, Zn, A' = Ln, Bi, Al, Fe, B= V, Nb, Ta, Mo, W

und B' = Ti, Zr, Hf, Sn, Ge, Si, Nb, Ta und 0 < y < 2

oder ein Oxidnitrid-Pigment der allgemeinen Formel

$CD_{2-m}D'_mO_{4-m}N_m$ mit C = Mg, Ca, Mn, Fe, Co, Ni, Zn und D = Al, Ga, In, Ti, V, Cr, Fe, Co, Ni und D' = Ti, Zr, HF, Sn, Ge, Si, Nb, Ta, und 0 < m < 2

oder ein Oxidnitrid-Pigment der allgemeinen Formel

$C_{1-n}C'_nD_2O_{4-n}N_n$ mit C = Mg, Ca, Mn, Fe, Co, Ni, Zn, C' = Al, Ga, In, Ti, V, Cr, Fe,

Co, Ni, D = Al, Ga, In, Ti, V, Cr, Fe, Co, Ni und 0 < n < 2

oder ein Oxidnitrid-Pigment der allgemeinen Formel

$A'_2CBO_5N$ mit A' = Ln, Bi, Al, Fe, C=Mg, Ca, Mn, Fe, Co, Ni, Zn, B= V, Nb, Ta, Mo, W

oder ein Oxidnitrid-Pigment der allgemeinen Formel

$A'_2A''BO_4N_2$ mit A' = Ln, Bi, Al, Fe, A'' = Ln, Bi, B = V, Nb, Ta, Mo, W

oder ein Oxidnitrid-Pigment der allgemeinen Formel

$A'_2DBO_3N_3$ mit A' = Ln, Bi, Al, Fe, D = Al, Ga, In, Ti, V, Cr, Fe, Co, Ni

und B = V, Nb, Ta, Mo, W

ist.

Ein Farbbildschirm mit einem roten Leuchtstoff und einem der genannten Oxidnitrid-Pigmente liefert ein kontrastreiches und reflexionsarmes Bild, weil diese Oxidnitrid-Pigmente aufgrund ihrer Mischkristalleigenschaften in ihren Absorptionseigenschaften genau an das Emissionsspektrum des Leuchtstoffes angepaßt werden können. Die Lage der Absorptionskanten kann durch Wahl der Zusammensetzung, insbesondere des O/N-Verhältnisses, über den gesamten Bereich des sichtbaren Spektrums verschoben werden. Die genannten Oxidnitrid-Pigmente zeichnen sich im Vergleich zu herkömmlichen $Fe_2O_3$-Pigmenten durch steilere Absorptionskanten im gelbroten Spektralbereich und durch eine hohe Absorptivität aus. Daher können die pigmenthaltigen Schichten dünn und die Pigmentmenge klein gehalten werden. Die erfindungsgemäßen Oxidnitrid-Pigmente sind einfach herzustellen und leicht in einer Leuchtstoffzubereitung zu verarbeiten. Sie haften gut auf der Oberfläche der bekannten roten Leuchtstoffe. Sie sind beständig gegen Elektronenstrahlung und Gasentladungen, haben einen sehr niedrigen Dampfdruck, eine ausreichende Temperaturbeständigkeit bis 700°C und sind nicht giftig.

Nachfolgend wird die Erfindung anhand zweier Figuren und zweier Ausführungsbeispiele weiter erläutert.

Fig. 1 zeigt die diffuse Reflexion eines roten Oxidnitrid-Pigmentes im Vergleich zu einem herkömmlichen roten $Fe_2O_3$-Pigments sowie der Emission von $Y_2O_2S$:Eu.

Fig. 2 zeigt die diffuse Reflexion eines roten und eines gelben Oxidnitrid-Pigmentes im Vergleich zur Emission von $Y_2O_2S$:Eu.

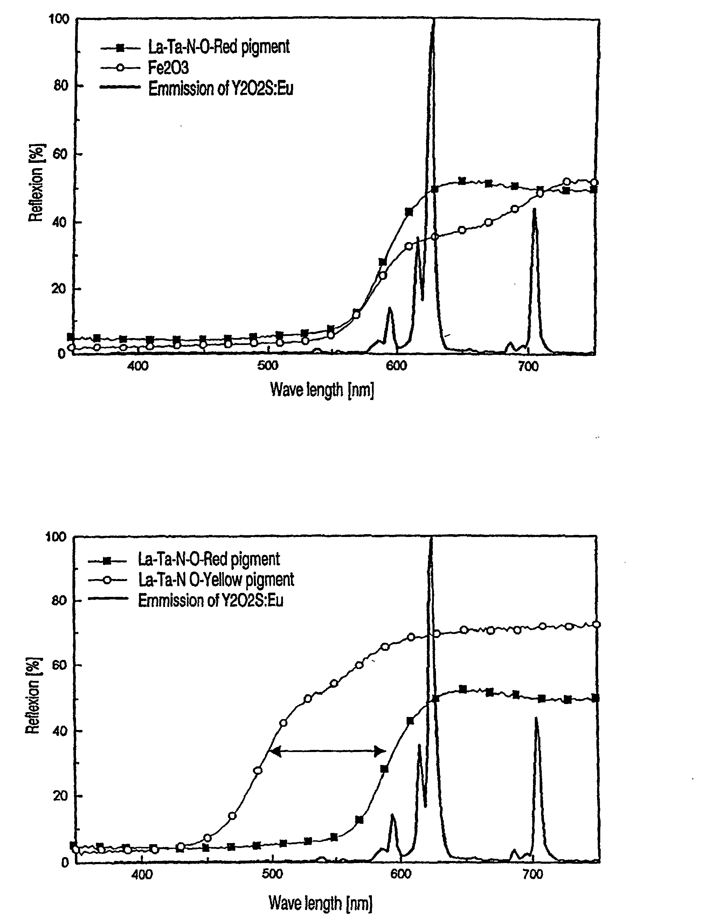

Ein Farbbildschirm nach der Erfindung umfaßt einen roten Leuchtstoff und ein Oxidnitrid-Pigment. Als rot lumineszierenden Leuchtstoff verwendet werden können für die Erfindung Oxidhalogenide, z. B. YOCl:Eu, YOBr:Eu, LaOF:Eu, oder binäre Oxide, z.B. CaO:Eu, $Y_2O_3$:Eu, $La_2O_3$Eu, $ThO_2$:Eu, oder Borate, z. B. $MgB_2O_4$:Mn, $SrB_2O_4$:Sm, $MgYBO_4$:Eu, $LaBO_3$:Eu, $LaAl_3B_4O_{12}$:Eu, $YAl_3B_4O_{12}$:Eu oder Aluminate, z.B. $LiAlO_2$:Fe, $YAlO_3$:Eu, oder Silikate, z.B. $Ca_2MgSi_2O_7$:Eu,Mn, oder Phosphate, z. B. $Zn_3(PO_4)_2$:Mn, $MgBaP_2O_7$:Eu,Mn oder Sulfate, z.B. $SrSO_4$:Bi, oder Molybdate, Wolframate oder Vanadate, z.B. $CaMoO_4$:Eu, $La_2W_3O_{12}$:Eu, $YVO_4$:Eu, $LaVO_4$:Eu oder Sulfide ZnS:Mn.Te, ZnS:Sn, CaS:Eu, $ZnGa_2S_4$:Mn, $Y_2O_2S$:Eu.

Die Eigenschaften der verwendeten Oxidnitrid-Pigmente unterliegen der Mischungsregel, d.h. die Eigenschaften ändern sich kontinuierlich mit der Zusammensetzung. Die Farbe des Pigmentes variiert je nach Zusammensetzung zwischen rot und gelb. Dadurch ist es möglich, durch Wahl einer geeigneten Zusammensetzung die Lage der Absorptionskanten des Oxidnitrid-Pigmentes zu optimieren und das Absorptionsspektrum flexibel auf die Emissionsbanden des jeweils eingesetzten Leuchtstoffes einzustellen. Speziell als Bestandteil eines Grünpigmentes kann so eine optimale Anpassung auch an schmalbandig emittierende Leuchtstoffe, z. B. Terbium-aktivierter Leuchtstoffe wie $Y_2SiO_5$:Tb oder LaOBr:Tb u.ä. ermöglicht werden. Durch Verwendung von zwei Oxidnitrid-Pigmenten mit abgestimmtem Abstand ihrer Absorptionskanten kann auch ein Transmissionsfenster definiert werden. Insbesondere kann für schmalbandig emittierende Leuchtstoffe wie $Y_2SiO_5$:Tb oder LaOBr:Tb ein gelboranges Oxidnitrid-Pigment mit einem blaugrünen Pigment zu einem optimalen Grünpigment kombiniert werden.

Je nach Partikelgröße des Oxidnitrid-Pigmentes sind die damit hergestellten Parbfilterschichten transparent oder nicht transparent. Oxidnitrid-Pigmente mit einer Partikelgröße, die klein genug ist, um transparente Schichten zu bilden, können nicht nur zur Pigmentierung der Leuchtstoffe, sondern auch als separate Farbfilterschicht zwischen Bildschirmglas und Leuchtstoffschicht angebracht werden.

Zur Herstellung des Farbbildschirms geht man von einem roten Leuchtstoff aus. Um den roten Leuchtstoff mit einem Oxidnitrid-Pigment zu bedecken, werden zunächst stabile wäßrige Suspensionen des Leuchtstoffs wie auch des Pigments hergestellt. Hierzu ist zunächst eine mechanische Zerkleinerung agglomerierter Partikel notwendig. Rote Leuchtstoffe wie zum Beispiel $Y_2O_2S$:Eu werden in alkalischer Lösung (pH 8,5 bis 9,5) mit geeigneten Mahlhilfen desagglomeriert. Dabei kann die Zugabe von Alkalimetallsilicaten (0.01 bis 0.1 Gew.-%), kleinteiligem kolloidalem $SiO_2$ (0.01 bis 0.1 Gew.-%, Partikeldurchmesser: 10 bis 40 nm) oder organischen Polymeren (Gelatine, Acrylsäuren, Melaminharze, Harnstoffharze, Polyurethane etc., 0.01 bis 0.1 Gew.-%) hilfreich sein. Nach der Desagglomeration ist die Leuchtstoffsuspension im neutralen bis schwach alkalischen pH-Bereich stabil. Die oben aufgeführten Oxidnitrid-Pigmente werden ebenfalls mit geeigneten Mahlkörpern und Zugabe von Alkalimetallsilicaten (0.01 bis 0.05 Gew.-%, bezogen auf den zu pigmentierenden Leuchtstoff), kleinteiligem kolloidalem $SiO_2$ (0.01 bis 0.05 Gew.-% bezogen auf den zu pigmentierenden Leuchtstoff, Partikeldurchmesser: 10 bis 40 nm) und/oder einem organischen Polymer (Gelatine, Acrylsäuren, Melaminharze, Harnstoffharze, Polyurethane etc., 0.01 bis 0.1 Gew.-%, bezogen auf den zu pigmentierenden Leuchtstoff) desagglomeriert.

Die Oberfläche des Leuchtstoffes wird nun zunächst mit einem Binder, welcher die Haftung des Pigments gewährleistet, überzogen. Als Bindersysteme können solche, wie sie auch für die herkömmliche Pigmentierung roter Leuchtstoffe mit $Fe_2O_3$ in Gebrauch sind, eingesetzt werden. Dies können anorganische Oxide, aber auch organische Polymere wie Gelatine, Acrylsäuren, Melaminharze, Harnstoffharze, Polyurethane etc. sein . Bei neutralem pH-Wert kann daran anschließend die stabile Pigmentsuspensionen langsam der Leuchtstoffsuspension zugetropft werden. Das Pigment haftet nach einiger Zeit zuverlässig auf der Oberfläche des Leuchtstoffes. Abschließend kann der nun pigmentierte Leuchtstoff mit weiteren anorganischen Oxiden oder organischen Polymeren bedeckt werden.

Zur Herstellung des Farbbildschirms kann beispielsweise das Farbbildschirmglas zunächst mittels eines photolithographischen Verfahrens mit dem Muster einer Schwarzmatrix überzogen. Danach werden die Raster der drei Primärfarben Blau, Rot und Grün unter Benutzung von Suspensionen pigmentierter Leuchtstoffe in drei aufeinanderfolgenden photolithographischen Schritten nach den bekannten Verfahren aufgebracht. Alternativ können die Leuchtstoffe auch in einem Druckverfahren aufgebracht werden. Im Fall des Einsatzes von Farbfilterschichten zwischen dem Farbbildschirmglas und den Leuchtstoffschichten werden die Leuchtstoffe nicht pigmentiert. Statt dessen wird gemeinsam mit dem Leuchtstoff oder in einem getrennten Schritt eine Schicht des Oxidnitrid-Pigmentes derart auf dem Schirmglas aufgebracht, daß diese zwischen dem Schirmglas und dem entsprechenden Leuchtstoffraster positioniert wird. Das Auftragen kann photolithographisch unter Benutzung von Suspensionen der Oxidnitrid-Pigmente oder alternativ durch ein Druckverfahren erfolgen. Die fertige, alle drei Farben und eventuelle Farbfilterschichten umfassende Farbbildschirmbeschichtung kann für normale Anwendungen in Farbfernsehröhren oder Farbmonitoren mit einem Aluminiumfilm auf der Rückseite versehen und schließlich zur fertigen Röhre montiert werden.

Ausführungsbeispiel 1

Eine stabile Suspension eines Oxidnitrid-Pigmentes wird erhalten, wenn 3,2 g Lanthan-Tantal-Oxidnitrid mit 120 ml demineralisiertem Wasser und 3 ml einer 15prozentigen Kaliumsilikatlösung gemischt und 4 Tage naß gemahlen werden.

Weiterhin werden 800 g rotes $Y_2O_2S$:Eu-Leuchtstoffpulver grob gesiebt und mehrfach mit demineralisiertem Wasser gewaschen. Der so gereinigte Leuchtstoff wird mit demineralisiertem Wasser zu einer Suspension mit einem Volumen von 1 1 aufgefüllt. Der pH-Wert der Suspension wird mit 2molarer Natronlauge auf einen Wert von 9.3 eingestellt. Ferner werden 8 ml einer Suspension mit 3 Gew.-5 $SiO_2$ mit einem Partikeldurchmesser von 10 bis 40 nm zugegeben. Die vereinigten Suspensionen werden 30 min gerührt, anschließend werden Mahlkörper zugefügt und es wird 2h naßgemahlen. Nach Abtrennen der Mahlkörper erhält man eine stabile Suspension mit einem Volumen von 31, deren pH-Wert mit 2molarer Salzsäure auf 7.0 eingestellt wird. Die Suspension wird weitere 30 min gerührt und dann mit einer Lösung von 2,17 g Zinkacetat-Dihydrat in 50 ml Wasser versetzt. Anschließend wird der pH-Wert mit 2molarer Natronlauge langsam auf 9,3 angehoben. Nach 30minütigem Rühren stellt man mit 2molarer Salzsäure auf eine pH-Wert von 7,3 ein. Nach weiteren 30 min tropft man unter Rühren langsam die Suspension des Oxidnitrid-Pigmentes zu. Der pH-Wert wird in einem Bereich von 6,8 bis 7.5 gehalten. Man rührt die Suspension eine weitere Stunde, läßt den pigmentierten $Y_2O_2S$:eu-Leuchtstoff sedimentieren und filtriert ab. Der Filterkuchen wird nachfolgend dreimal mit je 100 ml demineralisiertem Wasser gewaschen. Der beschichtete Leuchtstoff wird dann 15 h bei 140 °C getrocknet und durch ein Sieb mit der Maschenweite 36 µm gesiebt.

Ausführungsbeispiel 2

Eine stabile Suspension mit einem rot leuchtenden $Y_2O_2S$:Eu-Leuchtstoffpulverund mit einem Oxidnitrid-Pigment wird wie in Ausführungsbeispiel 1 beschrieben hergestellt. Nach dreißigminütigem Rühren gibt man zur stabilen Leuchtstoffsuspension (pH-Wert: 6,8 bis 7,2) eine Lösung von 0.8 g Gelatine in 200 ml warmem Wasser. Nach weiteren 30 Minuten tropft man unter Rühren langsam die stabile Pigmentsuspension zu. Der pH-Wert wird während der gesamten Zeit in einem Bereich von 6,8 bis 7,5 gehalten. Man rührt die Suspension eine weitere Stunde, läßt den pigmentierten $Y_2O_2S$:Eu-Leuchtstoff sedimentieren und filtriert ab. Der Filterkuchen wird nachfolgend dreimal mit je 100 ml demineralisiertem Wasser gewaschen. Der beschichtete Leuchtstoff wird dann etwa 15 h bei 140°C an der Luft getrocknet und mittels eines Stahlsiebs (Porenweite 36 µm) gesiebt.

Ausführungsbeispiel 3

Eine stabile Suspension mit einem rot leuchtenden $Y_2O_2S$:Eu-Leuchtstoffpulverund mit einem Oxidnitrid-Pigment wird wie in Ausführungsbeispiel 1 beschrieben hergestellt. 420 g diese Suspension werden mit 180 g einer 0.5-prozentigen Lösung eines hydrophob modifizierten Acrylat-Methacrylat-Copolymers mit einem pH-Wert > 7 gemischt. Die polymerhaltige Suspension wird auf der Innenseite eines Bildschirms, der mit einer photolithografisch strukturierten Polymerschicht versehen ist, aufgetragen und getrocknet. Man erhält eine Oxidnitrid-Pigmentschicht von 1,2 µm Schichtdicke.

Die strukturierte Polymerschicht wird durch Säurebehandlung erweicht und bei dem anschließenden Spülen mit Wasser zusammen mit der darauf abgeschiedenen Pigmentschicht abgelöst. Nur die direkt auf dem Bildschirmglas aufgetragene Pigmentschicht haftet so stark auf dem Glas, dass der Spülvorgang diese Teile der Beschichtung nicht ablöst. Dadurch erhält man eine strukturierte Pigmentschicht.

**Patentansprüche**

1. Farbbildschirm mit einem roten Leuchtstoff und einem Farbpigment,
   **dadurch gekennzeichnet,**
   **daß** das Farbpigment ein Oxidnitrid-Pigment der allgemeinen Formel

$$A_{1-x}A'_xBO_{2-x}N_{1+x} \text{ mit A = Mg, Ca, Sr, Ba, Zn, A' = Ln, Bi, Al, Fe, B= V, Nb, Ta, Mo, W}$$

$$\text{und B' = Ti, Zr, Hf, Sn, Ge, Si, Nb, Ta und } 0 < x < 1$$

oder ein Oxidnitrid-Pigment der allgemeinen Formel

$$AB_{1-x}B'_xBO_{1+x}N_{2-x} \text{ mit A = Mg, Ca, Sr, Ba, Zn, A' = Ln, Bi, Al, Fe, B= V, Nb, Ta, Mo, W}$$

$$\text{und B' = Ti, Zr, Hf, Sn, Ge, Si, Nb, Ta und } 0 < x < 1$$

oder ein Oxidnitrid-Pigment der allgemeinen Formel

$$A_yA'_{2-y}B_2O_{5+y}N_{2-y} \text{ mit A = Mg, Ca, Sr. Ba, Zn, A' = Ln, Bi, Al, Fe, B= V, Nb, Ta, Mo, W}$$

$$\text{und B' = Ti, Zr, Hf, Sn, Ge, Si, Nb, Ta und } 0 < y < 2$$

oder ein Oxidnitrid-Pigment der allgemeinen Formel

$$A'_2B_{2-y}B'_yO_{5+y}N_{2-y} \text{ mit A = Mg, Ca, Sr. Ba, Zn, A' = Ln, Bi, Al, Fe, B= V, Nb, Ta, Mo, W}$$

$$\text{und B' = Ti, Zr, Hf, Sn, Ge, Si, Nb, Ta und } 0 < y < 2$$

oder ein Oxidnitrid-Pigment der allgemeinen Formel

$$CD_{2-m}D'_mO_{4-m}N_m \text{ mit C = Mg, Ca, Mn, Fe, Co, Ni, Zn und D = Al, Ga, In, Ti, V, Cr,}$$

$$\text{Fe, Co, Ni und D' = Ti, Zr, HF, Sn, Ge, Si, Nb, Ta, und } 0 < m < 2$$

oder ein Oxidnitrid-Pigment der allgemeinen Formel

$$C_{1-n}C'_nD_2O_{4-n}N_n \text{ mit C = Mg, Ca, Mn, Fe, Co, Ni, Zn, C' = Al, Ga, In, Ti, V, Cr, Fe,}$$

$$\text{Co, Ni, D = Al, Ga, In, Ti, V, Cr, Fe, Co, Ni und } 0 < n < 2$$

oder ein Oxidnitrid-Pigment der allgemeinen Formel

$$A'_2CBO_5N \text{ mit A' = Ln, Bi, Al, Fe, C=Mg, Ca, Mn, Fe, Co, Ni, Zn, B= V,}$$

$$\text{Nb, Ta, Mo, W}$$

oder ein Oxidnitrid-Pigment der allgemeinen Formel

$$A'_2A''BO_4N_2 \text{ mit A' = Ln, Bi, Al, Fe, A'' = Ln, Bi, B = V, Nb, Ta, Mo, W}$$

oder ein Oxidnitrid-Pigment der allgemeinen Formel

$$A'_2DBO_3N_3 \text{ mit A' = Ln, Bi, Al, Fe, D = Al, Ga, In, Ti, V, Cr, Fe, Co, Ni}$$

$$\text{und B = V, Nb, Ta, Mo, W}$$

ist.

**Claims**

1. A color display screen comprising a red phosphor and a color pigment, **characterized in that** the color pigment is an oxide-nitride pigment of the general formula

$$A_{1-x}A'_xBO_{2-x}N_{1+x}, \text{ where } A' = Mg, Ca, Sr, Ba, Zn, A' = Ln, Bi, Al, Fe, B= V, Nb, Ta, Mo,$$

$$W, \text{ and } B' = Ti, Zr, Hf, Sn, Ge, Si, Nb, Ta \text{ and } 0 < x < 1,$$

or an oxide-nitride pigment of the general formula

$$AB_{1-x}B'_xBO_{1+x}N_{2-x}, \text{ where } A = Mg, Ca, Sr, Ba, Zn, A' = Ln, Bi, Al, Fe, B= V, Nb, Ta, Mo,$$

$$W \text{ and } B' = Ti, Zr, Hf, Sn, Ge, Si, Nb, Ta \text{ and } 0 < x < 1,$$

or an oxide-nitride pigment of the general formula

$$A_yA'_{2-y}B_2O_{5+y}N_{2-y}, \text{ where } A = Mg, Ca, Sr. Ba, Zn, A' = Ln, Bi, Al, Fe, B= V, Nb, Ta, Mo,$$

$$W \text{ and } B' = Ti, Zr, Hf, Sn, Ge, Si, Nb, Ta, \text{ and } 0 < y < 2,$$

or an oxide-nitride pigment of the general formula

$$A'_2B_{2-y}B'_yO_{5+y}N_{2-y}, \text{ where } A = Mg, Ca, Sr. Ba, Zn, A' = Ln, Bi, Al, Fe, B= V, Nb, Ta, Mo,$$

$$W, \text{ and } B' = Ti, Zr, Hf, Sn, Ge, Si, Nb, Ta \text{ and } 0 < y < 2,$$

or an oxide-nitride pigment of the general formula

$$CD_{2-m}D'_mO_{4-m}N_m, \text{ where } C = Mg, Ca, Mn, Fe, Co, Ni, Zn \text{ et } D = Al, Ga, In, Ti, V, Cr, Fe,$$

$$Co, Ni \text{ et } D' = Ti, Zr, HF, Sn, Ge, Si, Nb, Ta, \text{ et } 0 < m < 2,$$

or an oxide-nitride pigment of the general formula

$$C_{1-n}C'_nD_2O_{4-n}N_n, \text{ where } C = Mg, Ca, Mn, Fe, Co, Ni, Zn, C' = Al, Ga, In, Ti, V, Cr, Fe, Co,$$

$$Ni, D = Al, Ga, In, Ti, V, Cr, Fe, Co, Ni, \text{ and } 0 < n < 2,$$

or an oxide-nitride pigment of the general formula

$$A'_2CBO_5N, \text{ where } A' = Ln, Bi, Al, Fe, C=Mg, Ca, Mn, Fe, Co, Ni, Zn, B= V, Nb, Ta, Mo,$$

$$W,$$

or an oxide-nitride pigment of the general formula

$$A'_2A''BO_4N_2, \text{ where } A' = Ln, Bi, Al, Fe, A'' = Ln, Bi, B = V, Nb, Ta, Mo, W,$$

or an oxide-nitride pigment of the general formula

$A'_2DBO_3N_3$, where A' = Ln, Bi, Al, Fe, D = Al, Ga, In, Ti, V, Cr, Fe, Co, Ni,

and B = V, Nb, Ta, Mo, W.

**Revendications**

1. Ecran couleur avec une substance luminescente rouge et un pigment couleur, le pigment couleur étant un pigment de nitrure d'oxyde de formule générale

$A_{1-x}A'_xBO_{2-x}N_{1+x}$ avec A=Mg, Ca, Sr, Ba, Zn, A'= Ln, Bi, Al, Fe, B= V, Nb, Ta, Mo,

W et B' = Ti, Zr, Hf, Sn, Ge, Si, Nb, Ta et $0 < x < 1$

ou un pigment de nitrure d'oxyde de formule générale

$AB_{1-x}B'_xBO_{1+x}N_{2-x}$ avec A= Mg, Ca, Sr, Ba, Zn, A'= Ln, Bi, Al, Fe, B=V, Nb, Ta, Mo,

W et B'= Ti, Zr, Hf, Sn, Ge, Si, Nb, Ta et $0 < x < 1$

ou un pigment de nitrure d'oxyde de formule générale

$A_yA'_{2-y}B'_2O_{5+y}N_{2-y}$ avec A=Mg, Ca, Sr, Ba, Zn, A' = Ln, Bi, Al, Fe, B= V, Nb, Ta, Mo,

W et B'= Ti, Zr, Hf, Sn, Ge, Si, Nb, Ta et $0<y<2$

ou un pigment de nitrure d'oxyde de formule générale

$A'_2B_{2-y}B'yO_{5+y}N_{2-y}$ avec A= Mg, Ca, Sr.Ba, Zn, A'= Ln, Bi, Al, Fe, B = V, Nb, Ta, Mo,

W et B'= Ti, Zr, Hf, Sn, Ge, Si, Nb, Ta et $0 < y < 2$

ou un pigment de nitrure d'oxyde de formule générale

$CD_{2-m}D'_mO_{4-m}N_m$ avec C = Mg, Ca, Mn, Fe, Co, Ni, Zn et D = Al, Ga, In, Ti, V, Cr, Fe,

Co, Ni et D' = Ti, Zr, Hf, Sn, Ge, Si, Nb, Ta et $0 < m < 2$

ou un pigment de nitrure d'oxyde de formule générale

$C_{1-n}C'_nD_2O_{4-n}N_n$ avec C = Mg, Ca, Mn, Fe, Co, Ni, Zn, C' = Al, Ga, In, Ti, V, Cr, Fe, Co,

Ni, D = Al, Ga, In, Ti, V, Cr, Fe, Co, Ni et $0 < n < 2$

ou un pigment de nitrure d'oxyde de formule générale

$A'_2CBO_5N$ avec A' = Ln, Bi, Al, Fe, C = Mg, Ca, Mn, Fe, Co, Ni, Zn, B = V, Nb, Ta, Mo, W

ou un pigment de nitrure d'oxyde de formule générale

$$A'_2A''BO_4N_2 \text{ avec } A' = Ln, Bi, Al, Fe; A'' = Ln, Bi, B = V, Nb, Ta, Mo, W$$

ou un pigment de nitrure d'oxyde de formule générale

$$A'_2DBO_3N_3 \text{ avec } A' = Ln, Bi, Al, Fe, D = Al, Ga, In, Ti, V, Cr, Fe, Co, Ni$$

$$\text{et } B = V, Nb, Ta, Mo, W.$$